# EUROPÄISCHE PATENTSCHRIFT

(11) **EP 2 740 211 B1**
(45) Veröffentlichungstag und Bekanntmachung des Hinweises auf die Patenterteilung: **14.09.2016**
(21) Anmeldenummer: 12735460.3
(22) Anmeldetag: 10.07.2012
(51) Int. Cl.: H02P 31/00

(54) **UMRICHTERSYSTEM MIT ÜBERWACHUNGSEINRICHTUNG, ANTRIEB UND FAHRZEUG**
INVERTER SYSTEM WITH MONITORING DEVICE, DRIVE AND VEHICLE
SYSTÈME REDRESSEUR DOTÉ D'UN DISPOSITIF DE SURVEILLANCE, MÉCANISME D'ENTRAÎNEMENT ET VÉHICULE

(30) Priorität: 05.08.2011 DE 102011109537
(43) Veröffentlichungstag der Anmeldung: 11.06.2014
(73) Patentinhaber: Sew-Eurodrive GmbH & Co. KG, 76646 Bruchsal (DE)
(72) Erfinder: BUDZEN, Harald, 76829 Landau (DE)
(86) Internationale Anmeldenummer: PCT/EP2012/002899
(87) Internationale Veröffentlichungsnummer: WO 2013/020625

(56) Entgegenhaltungen:
- DE-A1- 10 152 996
- DE-A1-102007 037 850
- SU-A1- 1 538 859

## Beschreibung

Die Erfindung betrifft ein Umrichtersystem mit Überwachungseinrichtung, Antrieb und Fahrzeug.

Antriebe, welche einen umrichtergespeisten Elektromotor aufweisen, sind allgemein bekannt. Dabei weisen die Umrichter üblicherweise eine Feldbusschnittstelle auf, so dass Sollwertvorgaben als Datensignal übertragbar sind.

Aus der DE 101 52 996 A1 ist eine Motoransteuerung für einen Motor mit einem Rückmeldepotentiometer bekannt.

Aus der SU 1538859 A1 ist ein DC-Motor bekannt, bei dem zwei Potentiometer als Sollwertgeber verwendet werden

Aus der DE 10 2007 037 850 A1 ist ein Antriebssystem bekannt.

Der Erfindung liegt daher die Aufgabe zugrunde, die Sicherheit, insbesondere Anlagensicherheit, bei einem Antrieb zu verbessern.

Erfindungsgemäß wird die Aufgabe bei dem Umrichtersystem mit Überwachungseinrichtung nach den in Anspruch 1, bei dem Antrieb nach den in Anspruch 11 und bei dem Fahrzeug nach den in Anspruch 12 angegebenen Merkmalen gelöst.

Wichtige Merkmale der Erfindung bei dem Umrichtersystem sind, dass es mit einer Überwachungseinrichtung ausgeführt ist,
wobei zur Eingabe eines Sollwerts zwei mechanisch gekoppelte Eingabemittel vorgesehen sind,
wobei jedes Eingabemittel, insbesondere abhängig von der mechanischen Betätigung, ausgangsseitig eine Signalspannung bereit stellt,
wobei die Signalspannung des ersten Eingabemittels der Signalelektronik des Umrichters zugeführt wird und diese eine entsprechende Signalspannung, insbesondere dieselbe, an die Überwachungseinrichtung weiterleitet,
wobei die Signalspannung des zweiten Eingabemittels der Überwachungseinrichtung zugeleitet wird,
wobei die beiden Signalspannungen, insbesondere nach Filterung und/oder Impedanzanpassung, einem Mittel zur mathematischen Verknüpfung zugeführt werden, insbesondere addiert oder multipliziert werden, und das ausgangsseitige Signal des Mittels auf unzulässige Abweichung von einem konstanten Wert überwacht wird.

Von Vorteil ist dabei, dass die mathematische Verknüpfung derart ausführbar ist, dass als Ergebnis der Verknüpfung ein konstanter Wert sich ergeben muss, solange der Normalbetrieb, also der Betrieb ohne aufgetretene Fehler, stattfindet. Bei Auftreten eines Fehler, wie beispielsweise Fehlfunktion eines Teils oder einer Übertragungsstrecke, wird ein Abschaltsignal erzeugt, so dass der Antrieb in einen sicheren Zustand übergeht, beispielsweise Stillstand oder sichere Geschwindigkeit.

Dabei ist der Umrichter und das Überwachungssystem voneinander getrennt aufgebaut, also in verschiedenen Gehäusen vorgesehen und/oder Umrichter und Überwachungssystem sind voneinander beabstandet.

Bei einer vorteilhaften Ausgestaltung sind die Eingabemittel derart gekoppelt, dass die Summe oder das Produkt im Normalbetrieb einem konstanten Wert entsprechen. Von Vorteil ist dabei, dass eine einfache Überwachung auf Abweichen, also auf das Auftreten eines Fehlers, ausführbar ist.

Bei einer vorteilhaften Ausgestaltung wird bei unzulässiger Abweichung ein Abschaltsignal von der Überwachungseinrichtung an die Signalelektronik übertragen, insbesondere wird ein Freigabesignal weggenommen. Von Vorteil ist dabei, dass die Sicherheit erhöht ist.

Bei einer vorteilhaften Ausgestaltung erzeugt die Signalelektronik des Umrichters ein Freigabesignal, welches der Überwachungseinrichtung zugeleitet wird,
wobei die Überwachungseinrichtung abhängig von diesem Freigabesignal eine Versorgungsspannung erzeugt, welche das zweite Eingabemittel versorgt. Von Vorteil ist dabei, dass nicht nur über die Signalleitungen abschaltrelevante Information übertragbar ist. Denn das Erzeugen oder Nicht-Erzeugen der Versorgungsspannung bewirkt das Vorhandensein einer Signalspannung oder das Nicht-Vorhandensein einer Signalspannung. Somit wird auch durch das Vorhandensein beziehungsweise Nicht-Vorhandensein eine Information übertragen.

Bei einer vorteilhaften Ausgestaltung wird die Versorgungsspannung des ersten Eingabemittels vom Umrichter, insbesondere von der Signalelektronik des Umrichters, erzeugt. Von Vorteil ist dabei, dass die jeweiligen Versorgungsspannungen von jeweils unterschiedlichen Geräten erzeugt werden.

Bei einer vorteilhaften Ausgestaltung sind die Eingabemittel als Potentiometer ausgeführt. Von Vorteil ist dabei, dass kostengünstige Eingabemittel verwendbar sind.

Bei einer vorteilhaften Ausgestaltung sind die Potentiometer mechanisch von einer gemeinsamen Welle betätigbar, insbesondere die Drehstellung des Zwischenabgriffs von der Drehstellung einer verbundenen Welle abhängt. Von Vorteil ist dabei, dass eine mechanische Kopplung in einfacher Weise ausführbar ist.

Bei einer vorteilhaften Ausgestaltung wird der kleinere Teil der vom Zwischenabgriff des ersten Eingabemittels herabgeteilten Versorgungsspannung als Signalspannung verwendet und der größere Teil der vom Zwischenabgriff des zweiten Eingabemittels herabgeteilten Versorgungsspannung als Signalspannung verwendet, oder, insbesondere abhängig von der Betätigungsstellung,
der kleinere Teil der vom Zwischenabgriff des zweiten Eingabemittels herabgeteilten Versorgungsspannung als Signalspannung verwendet wird und der größere Teil der vom Zwischenabgriff des ersten Eingabemittels herabgeteilten Versorgungsspannung als Signalspannung verwendet wird. Von Vorteil ist dabei, dass die mathematische Verknüpfung eine Summation ist und in besonders einfacher Weise mechanisch realisierbar ist, nämlich durch Verwenden des größeren beziehungsweise kleineren Teils der durch den Zwischenabgriff geteilten Versorgungsspannung.

Bei einer vorteilhaften Ausgestaltung ist der Sollwert die Drehzahl oder das Drehmoment, auf welche beziehungsweise auf welches der Umrichter hinregelt, indem er ausgangsseitig eine entsprechende Spannung stellt,

insbesondere wobei ein erfasster Ausgangsstrom auf einen Stromsollwert hin geregelt wird, wobei der Stromsollwert vom Sollwert abhängt. Von Vorteil ist dabei, dass ein Sollwert für eine Drehzahlregelung oder Drehmomentenregelung sicher übertragbar ist an die Steuerelektronik, welche eine entsprechende Regeleinheit aufweist.

Bei einer vorteilhaften Ausgestaltung weist der Umrichter ein erstes Gehäuseteil auf und die Eingabemittel von einem anderen Gehäuseteil sind zumindest teilweise gehäusebildend umgeben, insbesondere wobei das andere Gehäuseteil zumindest teilweise beide Eingabemittel gehäusebildend umgibt. Von Vorteil ist dabei, dass die beiden Gehäuseteile und somit die Sollwert-Eingabemittel und der Umrichter voneinander beabstandet anordenbar sind und trotzdem eine erhöhte Sicherheit erreichbar ist. Die Signale sind dabei über elektrische Leitungen, wie flexible Kabel, übertragbar oder über eine Funkverbindung oder Infrarotverbindung. Somit ist bei Ausfall der Übertragungsstrecke ebenfalls ein Abschalten des Umrichters ausführbar.

Wichtige Merkmale bei dem Antrieb sind, dass er mit einem vorgenannten Umrichtersystem ausgeführt ist und der Umrichter einen Elektromotor des Antriebs speist.

Von Vorteil ist dabei, dass der Sollwert für den Antrieb, welcher den drehzahlgeregelten oder drehmomentgeregelten Elektromotor aufweist, sicher übertragbar ist, insbesondere wobei bei

Auftreten eines Fehlers bei der Erzeugung der den Sollwert repräsentierenden Signalspannung oder bei Auftreten eines Fehlers bei der Signalübertragung ein Abschalten oder ein sonstiger sicherer Zustand bewirkt ist durch die Überwachungseinrichtung.

Wichtige Merkmale bei dem Fahrzeug sind, dass es mit einem solchen Antrieb ausgeführt ist.

Von Vorteil ist dabei, dass der Fahrer des Fahrzeugs den Sollwert in großem Abstand vom Umrichter eingeben kann und der Sollwert sicher übertragen wird. Denn bei Auftreten eines Fehlers wird der Antrieb in einen sicheren Zustand, insbesondere Stillstand, überführt.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

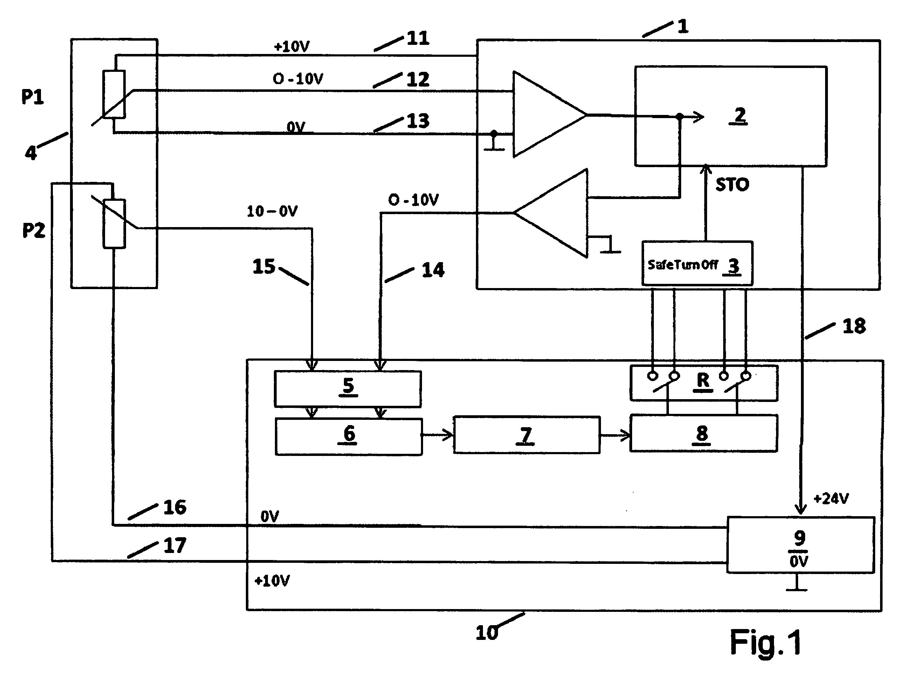

In der Figur 1 ist ein Umrichter 1 gezeigt, dem eine Sollwertvorgabe zugeführt wird. Die in Figur 1 gezeigte Anordnung ist in einem Fahrzeug angeordnet. Dabei speist der Umrichter 1 einen Elektromotor, wobei der Umrichter aus einem Energiespeicher und/oder induktiv aus einem bodenverlegten Primärleiter versorgt ist, wobei das Fahrzeug relativ zum Primärleiter verfahrbar ist.

Das Fahrzeug ist vorzugsweise ein Gabelstapler oder ein Elektrofahrzeug, wie Elektroauto.

Der einzugebende Sollwert ist als Drehmoment-Sollwert oder als Drehzahl-Sollwert wirksam, wobei der Wert elektrisch repräsentiert wird als Signalspannungswert, beispielhaft zwischen 0 V und 10 V.

Hierzu sind zwei Potentiometer P1 und P2 mechanisch gekoppelt, wobei das erste Potentiometer P1 über Leitungen 11 und 13 versorgt wird und das zweite Potentiometer P2 über Leitungen 16 und 17 versorgt wird. Die Versorgungsspannung ist dabei 10 Volt und die jeweils erzeugte Signalspannung wird als am Zwischenabgriff abgenommene, herabgeteilte Spannung erzeugt.

Dabei gibt je nach Stellung des Potentiometers das erste Potentiometer eine Signalspannung, also eine herabgeteilte Spannung über die Leitung 12 ab, welche bei der Stellung x den Wert U1 = x V aufweist. Entsprechend gibt das zweite Potentiometer die herabgeteilte Spannung U2 = 10 V -x V heraus, so dass die Summenspannung U1 + U2 stets 10 V beträgt, also unabhängig von der Stellung x. Dabei liegt im Stellbereich des Potentiometers das Minimum der Stellung x bei 0 und das Maximum bei 10.

Wenn also beide Potentiometer gleichartig an einer Welle angeordnet sind, ist es ausreichend die Anschlüsse für Leitungen der Versorgungsspannung 0 V und 10 V zu vertauschen. Bei einem alternativen Ausführungsbeispiel wird die geschilderte Invertierung der Signale von einer elektronischen Schaltung bestimmt, wobei die beiden Potentiometer gleichartig ausgeführt und elektrisch angeschlossen sind.

Wie in den Figuren gezeigt, wird die Signalspannung des ersten Potentiometers dem Umrichter zugeführt und von diesem eine entsprechende Spannung über die Leitung 14 einer Überwachungseinrichtung 10 weitergeleitet. Dieser Überwachungseinrichtung 10 wird auch die Signalspannung des zweiten Potentiometers P2 über die Leitung 15 zugeführt.

Bei einem weitergebildeten Ausführungsbeispiel wird statt der erwähnten Signalbandbreite zwischen 0 V und 10 V eine andere Signalbandbreite verwendet zwischen einer Mindestspannung und einer Maximalspannung. Diese andere Signalbandbreite kann beispielsweise den Wert 5 V umfassen.

Wie in den Figuren gezeigt, werden in der Überwachungseinrichtung 10 die über die Leitungen 14 und 15 zugeführten Signale zunächst gefiltert (5) und aufbereitet, insbesondere angepasst. Insbesondere wird hierbei die vom Umrichter ausgeführte Signalverarbeitung von dem dort am Eingang 12 eingehenden Signal berücksichtigt. Denn bei von der Figur 1 unterschiedlichen Ausführungsbeispielen wird das am Eingang eingehende Signal im Umrichter gefiltert und auch gegebenenfalls verarbeitet, insbesondere mit einer begrenzenden Rampe oder über mit einem Integrierglied verarbeitet. Dieses verarbeitete Signal wird dann über den Ausgang 14 an die Überwachungseinrichtung 10 weitergleitet. Das dortige Filter 5 und die nachgeordneten Verarbeitungsmittel (6, 7) berücksichtigen die im Umrichter 1 ausgeführten Verarbeitungen, so dass nur bei wesentlicher, insbesondere auch zeitlich wesentlicher, Abweichung des Summationssignals das STO-Signal, also Safe Turn Off Signal, ausgelöst wird.

Wie in Figur 1 gezeigt, wird in der Überwachungseinrichtung 10 die Summe der beiden Signalspannungen gebildet in einem Summations-Mittel (6), die im Normalbetrieb 10 Volt ergibt.

Das Ausgangssignal des Summations-Mittels wird einem Impedanzwandler 7 mit Hysterese-Bildung zugeführt. Ein nachfolgendes Vergleichsmittel 8 überwacht und vergleicht die summierte Spannung mit dem Maximalwert der Signalbandbreite, beispielsweise 10 V. Bei Überschreiten einer unzulässig hohen Abweichung wird das Sicherheitsrelais R abgeschaltet, welches die Versorgungsspannung des Umrichters und/oder ein Abschaltsignal STO über ein Mittel safe-turn-off 3 und die Leitung STO der Steuerelektronik des Umrichters 1 zuführt.

Durch das Abschalten bei Ausfall des Stromes ist die Anordnung drahtbruchsicher ausgeführt.

Die Steuerelektronik des Umrichters 1 erzeugt auch ein Freigabesignal, das über die Leitung 18, vorzugsweise als 24 V-Signal, einem Mittel 9 zur Erzeugung der Versorgungsspannung zugeführt wird, wobei die Versorgungsspannung dem Potentiometer zugeführt wird und beispielhaft 10 V beträgt. Bei Ausbleiben des Freigabesignals wird keine Versorgungsspannung erzeugt und somit keine Signalspannung vom zweiten Potentiometer P2 geliefert.

Auf diese Weise ist also die Sicherheit bei der Zuführung eines Sollwertes an den Umrichter erhöht. Denn der zugeführte Sollwert wird verglichen mit dem elektrisch unabhängig aber mechanisch abhängig, da gekoppelt, im Potentiometer P2 erzeugten Sollwert. Entsprechend wird aber auch bei Fehlfunktion der Signalelektronik die Versorgungsspannung weggenommen, indem das Freigabesignal über Leitung 18 zum Mittel zur Erzeugung der Versorgungsspannung ausbleibt.

Eine Selbsttestfunktion ist beim ersten Einlesen realisierbar.

Die mechanische Kopplung 4 ist beispielhaft dadurch realisierbar, dass die gleichartig aufgebauten und gleichermaßen mit einer Welle verbundenen Potentiometer P1 und P2 bei Drehbewegung der Welle um den gleichen Drehwinkel verdreht werden und somit die Versorgungsspannung gleichartig herabgeteilt wird, wobei allerdings der kleinere Teil am Potentiometer P1 und der größere Teil am Potentiometer P2 als Signalspannung verwendet wird beziehungswelse bei anderer Drehstellung der kleinere Teil am Potentiometer P2 und der größere Teil am Potentiometer P1 als Signalspannung verwendet wird

Bei weiteren erfindungsgemäßen Ausführungsbeispielen ist die Anordnung nach Figur 1 bei einer industriellen Anlage mit Umrichter zur sicheren Sollwerteingabe verwendet.

Bei weiteren erfindungsgemäßen Ausführungsbeispielen ist statt der Potentiometer mit Drehwelle ein Potentiometer mit linear verschieblichem Zwischenabgriff verwendet, so dass die beiden Potentiometer in einer Linie angeordnet sind und die beiden Zwischenabgriffe der Potentiometer gleichmäßig beabstandet sind.

Bei weiteren erfindungsgemäßen Ausführungsbeispielen werden die Signalspannungen als im Frequenzumrichter verarbeitetes Signal erzeugt und über die Leitung 14 übertragenen die Überwachungseinrichtung.

### Bezugszeichenliste

- 1: Umrichter
- 2: Mittel zur Sollwertverarbeitung und Anzeige des Sollwertes
- 3: Safe turn off
- 4: Mechanische Kopplung der Potentiometer P1 und P2
- 5: Filter
- 6: Mittel zur Summation und Spannungsanpassung
- 7: Mittel zur Impedanzwandlung
- 8: Mittel zur Spannungsüberwachung und Ansteuerung des Sicherheitsrelais R
- 9: Freigabemittel der Versorgungsspannung
- 10: Überwachungseinrichtung
- 11: Leitung für Versorgungsspannung 10 V
- 12: Leitung für Signalspannung
- 13: Leitung für Versorgungsspannung 0 V
- 14: Leitung für Signalspannung
- 15: Leitung für Signalspannung
- 16: Leitung für Versorgungsspannung 0 V
- 17: Leitung für Versorgungsspannung 10 V
- 18: Leitung für Signalspannung

- STO: Notausschaltsignal
- R: Sicherheitsrelais
- P1: Potentiometer
- P2: Potentiometer

## Patentansprüche

1. Umrichtersystem umfassend folgende Merkmale:
einen Umrichter (1),
eine Überwachungseinrichtung (10),
zwei mechanisch gekoppelte Eingabemittel (P1, P2) zur Eingabe eines jeweiligen Sollwerts, wobei jedes Eingabemittel (P1, P2), insbesondere abhängig von der mechanischen Betätigung, ausgangsseitig eine Signalspannung bereitstellt,
Mittel (11, 12, 13) zur Zuführung der Signalspannung des ersten Eingabemittels (P1) der Signalelektronik des Umrichters (1), wobei die Signalelektronik Mittel (14) zur Weiterleitung einer entsprechenden Signalspannung, insbesondere dieselbe, an die Überwachungseinrichtung (10) aufweist,
Mittel (15) zur Zuleitung der Signalspannung des zweiten Eingabemittels (P2) an die Überwachungseinrichtung (10), und
Mittel (5) zur Zuführung der beiden Signalspannungen, insbesondere nach Filterung und/oder Impedanzmessung, an ein Mittel (6) zur mathematischen Verknüpfung, und
ein Mittel (8) zur Überwachung des ausgangsseitigen Signals des Mittels (6) zur mathematischen Verknüpfung auf unzulässige Abweichung von einem konstanten Wert.

2. Umrichtersystem nach Anspruch 1,
**dadurch gekennzeichnet, dass**
die Eingabemittel derart gekoppelt sind, dass die Summe oder das Produkt **als Ergebnis der mathematischen Verknüpfung** im Normalbetrieb einem konstanten Wert entsprechen.

3. Umrichtersystem nach mindestens einem der vorangegangenen Ansprüche,
**dadurch gekennzeichnet, dass**
**ein Mittel zur Übertragung eines Abschaltsignals** von der Überwachungseinrichtung (10) an die Signalelektronik bei unzulässiger Abweichung **vorgesehen ist, insbesondere zur Wegnahme eines Freigabesignals.**

4. Umrichtersystem nach mindestens einem der vorangegangenen Ansprüche,
**dadurch gekennzeichnet, dass**
die Signalelektronik des Umrichters (1) ein Freigabesignal erzeugt, welches der Überwachungseinrichtung (10) zugeleitet ist,
wobei die Überwachungseinrichtung (10) abhängig von diesem Freigabesignal eine Versorgungsspannung erzeugt, welche das zweite Eingabemittel versorgt.

5. Umrichtersystem nach mindestens einem der vorangegangenen Ansprüche,
**dadurch gekennzeichnet, dass**
**der Umrichter (1),** insbesondere **die** Signalelektronik des Umrichters (1), die Versorgungsspannung des ersten Eingabemittels **erzeugt.**

6. Umrichtersystem nach mindestens einem der vorangegangenen Ansprüche,
**dadurch gekennzeichnet, dass**
die Eingabemittel als Potentiometer (P1, P2) ausgeführt sind.

7. Umrichtersystem nach Anspruch 6,
**dadurch gekennzeichnet, dass**
die Potentiometer (P1, P2) mechanisch von einer gemeinsamen Welle betätigbar sind, insbesondere die Drehstellung des Zwischenabgriffs von der Drehstellung einer verbundenen Welle abhängt,

8. Umrichtersystem nach mindestens einem der vorangegangenen Ansprüche,
**dadurch gekennzeichnet, dass**
**die Signalspannung des ersten Eingabemittels (P1) der** kleinere Teil der vom Zwischenabgriff des ersten Eingabemittels herabgeteilten Versorgungsspannung ist und die **Signalspannung des zweiten Eingabemittels (P2)** der größere Teil der vom Zwischenabgriff des zweiten Eingabemittels herabgeteilten Versorgungsspannung ist,
oder, insbesondere abhängig von der Betätigungsstellung,
**die Signalspannung des zweiten Eingabemittels (P1) der** kleinere Teil der vom Zwischenabgriff des zweiten Eingabemittels herabgeteilten Versorgungsspannung ist und **die Signalspannung des ersten Eingabemittels (P2)** der größere Teil der vom Zwischenabgriff des ersten Eingabemittels herabgeteilten Versorgungsspannung ist.

9. Umrichtersystem nach mindestens einem der vorangegangenen Ansprüche,
**dadurch gekennzeichnet, dass**
**der Umrichter (1) als Regelvorrichtung ausgeführt ist, ausgangsseitig eine derartige Spannung stellt, dass als Ziel der der Regelung der Sollwert, also die Drehzahl oder das Drehmoment, vorgesehen ist,**
**insbesondere wobei die Regelvorrichtung einen erfassten Ausgangsstrom auf einen Stromsollwert hin regelt,** wobei der Stromsollwert vom Sollwert abhängt.

10. Umrichtersystem nach mindestens einem der vorangegangenen Ansprüche,
**dadurch gekennzeichnet, dass**
der Umrichter (1) ein erstes Gehäuseteil aufweist und die Eingabemittel von einem anderen Gehäuseteil zumindest teilweise gehäusebildend umgeben sind, insbesondere wobei das andere Gehäuseteil zumindest teilweise beide Eingabemittel gehäusebildend umgibt.

11. Antrieb mit Umrichtersystem nach mindestens einem der vorangegangenen Ansprüche,
**dadurch gekennzeichnet, dass**
der Umrichter (1) einen Elektromotor des Antriebs speist.

12. Fahrzeug mit einem Antrieb nach Anspruch 11,

## Claims

1. Converter system comprising the following features:
a converter (1),
a monitoring device (10),
two mechanically coupled input means (P1, P2) for inputting a respective setpoint value, wherein each input means (P1, P2) provides a signal voltage, in particular depending on the mechanical actuation, on the output side,
means (11, 12, 13) for supplying the signal voltage of the first input means (P1) to the signal electronics of the converter (1), wherein the signal electronics have means (14) for transmitting a corresponding signal voltage, in particular the same, to the monitoring device (10),
means (15) for supplying the signal voltage of the second input means (P2) to the monitoring device (10), and
means (5) for supplying the two signal voltages, in particular after filtering and/or impedance measurement, to a means (6) for mathematical combination, and
a means (8) for monitoring the output-side signal of the means (6) for mathematical combination, for impermissible deviation from a constant value.

2. Converter system according to Claim 1,
**characterised in that**
the input means are coupled in such a manner that the sum or the product correspond in normal operation to a constant value as a result of the mathematical combination.

3. Converter system according to at least one of the preceding claims,
**characterised in that**
a means for transmitting a turn-off signal from the monitoring device (10) to the signal electronics in the case of impermissible deviation is provided, in particular for removing an enable signal.

4. Converter system according to at least one of the preceding claims,
**characterised in that**
the signal electronics of the converter (1) generate an enable signal which is supplied to the monitoring device (10),
wherein the monitoring device (10) generates, depending on this enable signal, a supply voltage which supplies the second input means.

5. Converter system according to at least one of the preceding claims,
**characterised in that**
the converter (1), in particular the signal electronics of the converter (1), generates the supply voltage of the first input means.

6. Converter system according to at least one of the preceding claims,
**characterised in that**
the input means are embodied as potentiometers (P1, P2).

7. Converter system according to Claim 6,
**characterised in that**
the potentiometers (P1, P2) are mechanically actuable by a common shaft, in particular the rotational position of the intermediate tap is dependent on the rotational position of a connected shaft.

8. Converter system according to at least one of the preceding claims,
**characterised in that**
the signal voltage of the first input means (P1) is the smaller part of the supply voltage divided down by the intermediate tap of the first input means and the signal voltage of the second input means (P2) is the larger part of the supply voltage divided down by the intermediate tap of the second input means,
or, in particular depending on the actuating position,
the signal voltage of the second input means (P1) is the smaller part of the supply voltage divided down by the intermediate tap of the second input means and the signal voltage of the first input means (P2) is the larger part of the supply voltage divided down by the intermediate tap of the first input means.

9. Converter system according to at least one of the preceding claims,
**characterised in that**
the converter (1) is embodied as a regulating device, on the output side sets such a voltage that as target of the regulation the setpoint value, i.e. the rotational speed or the torque, is provided,
in particular wherein the regulating device regulates a detected output current to a current setpoint value, wherein the current setpoint value depends on the setpoint value.

10. Converter system according to at least one of the preceding claims,
**characterised in that**
the converter (1) has a first housing part and the input means is surrounded by another housing part in a manner at least partially forming a housing, in particular wherein the other housing part at least partially surrounds both input means in a manner forming a housing.

11. Drive with converter system according to at least one of the preceding claims,
**characterised in that**
the converter (1) feeds an electric motor of the drive.

12. Vehicle with a drive according to Claim 11.

## Revendications

1. Système variateur comprenant les caractéristiques suivantes :
un variateur (1),
un dispositif de surveillance (10),
deux moyens d'entrée (P1, P2) couplés mécaniquement pour entrer une valeur de consigne respective, chaque moyen d'entrée (P1, P2) fournissant côté sortie une tension de signal, en particulier dépendante de l'actionnement mécanique,
des moyens (11, 12, 13) pour amener la tension de signal du premier moyen d'entrée (P1) à l'électronique de signalisation du variateur (1), l'électronique de signalisation présentant des moyens (14) pour transmettre une tension de signal correspondante, en particulier la même, au dispositif de surveillance (10),
des moyens (15) pour amener la tension de signal du deuxième moyen d'entrée (P2) au dispositif de surveillance (10), et
des moyens (5) pour amener les deux tensions de signal, en particulier après filtrage et/ou mesure d'impédance, à un moyen (6) de combinaison mathématique, et
un moyen (8) pour surveiller le signal côté sortie du moyen (6) de combinaison mathématique afin de détecter un écart inadmissible par rapport à une valeur constante.

2. Système variateur selon la revendication 1,
**caractérisé en ce**
**que** les moyens d'entrée sont couplés de telle sorte que la somme ou le produit résultant de la combinaison mathématique corresponde, en fonctionnement normal, à une valeur constante.

3. Système variateur selon au moins l'une des revendications précédentes,
**caractérisé en ce**
**qu'**un moyen pour transmettre un signal de déconnexion du dispositif de surveillance (10) à l'électronique de signalisation en cas d'écart inadmissible est prévu, en particulier pour retirer un signal d'autorisation.

4. Système variateur selon au moins l'une des revendications précédentes,
**caractérisé en ce**
**que** l'électronique de signalisation du variateur (1) génère un signal d'autorisation qui est amené au dispositif de surveillance (10),
le dispositif de surveillance (10) générant, en fonction de ce signal d'autorisation, une tension d'alimentation qui alimente le deuxième moyen d'entrée.

5. Système variateur selon au moins l'une des revendications précédentes,
**caractérisé en ce**
**que** le variateur (1), en particulier l'électronique de signalisation du variateur (1), génère la tension d'alimentation du premier moyen d'entrée.

6. Système variateur selon au moins l'une des revendications précédentes,
**caractérisé en ce**
**que** les moyens d'entrée sont réalisés sous la forme de potentiomètres (P1, P2).

7. Système variateur selon la revendication 6,
**caractérisé en ce**
**que** les potentiomètres (P1, P2) peuvent être actionnés mécaniquement par un arbre commun, en particulier la position de rotation de la prise intermédiaire dépendant de la position de rotation d'un arbre qui y est relié.

8. Système variateur selon au moins l'une des revendications précédentes,
**caractérisé en ce**
**que** la tension de signal du premier moyen d'entrée (P1) est la plus petite partie de la tension d'alimentation divisée par la prise intermédiaire du premier moyen d'entrée et la tension de signal du deuxième moyen d'entrée (P2) la plus grande partie de la tension d'alimentation divisée par la prise intermédiaire du deuxième moyen d'entrée,
ou, en particulier en fonction de la position d'actionnement,
la tension de signal du deuxième moyen d'entrée (P1) est la plus petite partie de la tension d'alimentation divisée par la prise intermédiaire du deuxième moyen d'entrée et la tension de signal du premier moyen d'entrée (P2) la plus grande partie de la tension d'alimentation divisée par la prise intermédiaire du premier moyen d'entrée.

9. Système variateur selon au moins l'une des revendications précédentes,
**caractérisé en ce**
**que** le variateur (1) est réalisé sous la forme d'un dispositif de régulation et fournit côté sortie une tension telle que la valeur de consigne, donc la vitesse de rotation ou le couple, est prévue comme objectif de la régulation,
en particulier le dispositif de régulation régulant un courant de sortie détecté à une valeur de consigne de courant, la valeur de consigne de courant dépendant de la valeur de consigne.

10. Système variateur selon au moins l'une des revendications précédentes,
**caractérisé en ce**
**que** le variateur (1) présente une première partie de boîtier et les moyens d'entrée sont entourés par une autre partie de boîtier formant au moins partiellement le boîtier, en particulier l'autre partie de boîtier entourant les deux moyens d'entrée en formant au moins partiellement le boîtier.

11. Entraînement comprenant un système variateur selon au moins l'une des revendications précédentes,
**caractérisé en ce**
**que** le variateur (1) alimente un moteur électrique de l'entraînement.

12. Véhicule équipé d'un entraînement selon la revendication 11.
